# EUROPEAN PATENT SPECIFICATION

(11) **EP 4 542 614 B1**
(45) Date of publication and mention of the grant of the patent: **08.07.2026**
(21) Application number: 24306403.7
(22) Date of filing: 27.08.2024
(51) Int. Cl.: H01H 71/08, H01H 83/10, H01R 9/26

(54) **LIGHTNING PROTECTION DEVICE, SURGE PROTECTOR, BACKUP PROTECTOR AND ELECTRICAL CONNECTOR**
BLITZSCHUTZVORRICHTUNG, ÜBERSPANNUNGSSCHUTZ, BACKUP-SCHUTZ UND ELEKTRISCHER VERBINDER
DISPOSITIF DE PROTECTION CONTRE LA FOUDRE, PROTECTION CONTRE LES SURTENSIONS, PROTECTION DE SECOURS ET CONNECTEUR ÉLECTRIQUE

(30) Priority: 17.10.2023 CN 202311346728
(43) Date of publication of application: 23.04.2025
(73) Proprietor: SCHNEIDER ELECTRIC INDUSTRIES SAS, 92500 Rueil-Malmaison (FR)
(72) Inventor: GAO, Jingxiang, Shanghai, 201203 (CN); CHEN, Yu, Shanghai, 201203 (CN); ZHONG, Xiangmin, Shanghai, 201203 (CN); ZHANG, Meng, Shanghai, 201203 (CN); LI, Xiaodong, Shanghai, 201203 (CN); WANG, Hongliang, Shanghai, 201203 (CN); TANG, Biao, Shanghai, 201203 (CN)
(74) Representative: Manitz Finsterwald Patent- und Rechtsanwaltspartnerschaft mbB

(56) References cited:
- EP-A1- 2 897 153
- EP-A2- 2 031 627
- CN-A- 111 342 248
- DE-A1- 102013 017 157
- US-A1- 2017 338 649

## Description

### FIELD

Embodiments of the disclosure generally relate to the technical field of electrical equipment, and more particularly, to a lightning protection device, a surge protector, a backup protector, and an electrical connector.

### BACKGROUND

A surge protector (SPD), also referred to as a lightning protector, is an electronic apparatus that provides safety protection for various electronic devices, instruments and meters, and communication lines. In a low-voltage power distribution system, when a spike current or voltage (for example, an overvoltage caused by lightning) is suddenly generated in an electrical loop or a communication line due to an external disturbance, the surge protector can be switched on to shunt in a very short time, thereby avoiding damage to other devices in the circuit by surge.

SSD is a backup protector in series at the front end of the SPD, which is also referred to as an external disconnector. The SSD, as a backup protection device for a new-generation surge protector, has high disconnection capacity upon occurrence of a short-circuit current, and has high surge-tolerance capability, and a short-circuit action current of the SSD is far lower than that of a traditional backup protection device under the condition of considering the disconnection capacity and the surge-tolerance capability. The low short-circuit current can be effectively disconnected, providing finer short-circuit protection for the surge protector.

In order to realize the connection between the SSD and the SPD, a conventional solution is to form the SSD and the SPD into independent products, and the connection between the SSD and the SPD is realized through wires. However, the additional wires increase product costs and are inconvenient to use. Another conventional solution is to form the SSD and the SPD into an integral product. This solution limits the use flexibility of the product, and when there is a problem with one of the SSD and the SPD, the SSD and the SPD can only be replaced as a whole, and the part that has the problem cannot be replaced separately. DE 102013017157 A1 discloses a device for assembling at least one protective plug in a terminal device. EP 2031627 A2 discloses a structural unit consisting of a residual current circuit breaker and an overvoltage protection device. DE102013017157A1, EP 2 897 153 A1 and EP2031627A2 further disclose example structures for a lightning protection device, a surge protector, a backup protector or an electrical connector.

### SUMMARY

An object of the disclosure is to provide a lightning protection device, a surge protector, a backup protector and an electrical connector, to at least partially solve the above problems.

In a first aspect of the disclosure, there is provided a lightning protection device including a surge protector and a backup protector capable of being connected via a connecting pin. The surge protector includes: a first housing, a side of the first housing facing the backup protector being provided with a first connecting hole; and a first live wire side conductive component disposed in the first housing. The backup protector includes: a second housing, a side of the second housing facing the surge protector being provided with a second connecting hole corresponding to the first connecting hole; and a second live wire side conductive component disposed in the second housing. At least one of the backup protector and the surge protector further includes an electrical connector disposed in the respective housing and electrically connected to the respective live wire side conductive component, and the connecting pin passes through the first connecting hole and the second connecting hole and is plugged into the electrical connector.

The electrical connector includes a first connecting component, a second connecting component and a third connecting component, the first connecting component includes a base part and first connecting parts disposed on two opposite sides of the base part, the second connecting component includes a bent part and a second connecting part, an end of the bent part is connected to a first side of the base part, the other end of the bent part is connected to the second connecting part, a gap is formed between the second connecting part and a surface of the base part facing away from the first connecting parts, the gap is located at a position corresponding to the respective connecting hole, the connecting pin passes through the first connecting hole and the second connecting hole and is inserted into the gap to be in contact with the base part and the second connecting part, the first connecting component is provided for plugging of the respective live wire side conductive component, and the third connecting component is connected to an end of the second connecting part away from the bent part and extends in a direction from the second connecting part to the base part.

In some embodiments, the surge protector includes a first electrical connector, the backup protector includes a second electrical connector, the first electrical connector and the second electrical connector are respectively configured as the electrical connector, an end of the connecting pin is inserted into the gap of the first electrical connector, and the other end of the connecting pin is inserted into the gap of the second electrical connector.

In some embodiments, the surge protector includes a first electrical connector configured as the electrical connector, an end of the connecting pin is inserted into the gap of the first electrical connector, and the other end of the connecting pin is fixedly connected to the backup protector and is electrically connected to the second live wire side conductive component.

In some embodiments, the surge protector further includes an electrical connecting component disposed on a live wire side, and the third connecting component of the first electrical connector is connected to the electrical connecting component.

In some embodiments, the backup protector includes a second electrical connector configured as the electrical connector, an end of the connecting pin is inserted into the gap of the second electrical connector, and the other end of the connecting pin is fixedly connected to the surge protector and electrically connected to the first live wire side conductive component.

In some embodiments, the surge protector further includes a third electrical connector, a ground side conductive component and a ground component, the third electrical connector is configured as the electrical connector, the first connecting component of the third electrical connector is provided for plugging of the ground side conductive component, and the third connecting component of the third electrical connector is connected to the ground component.

In some embodiments, a third connecting hole is provided on the first housing at a position corresponding to the gap of the third electrical connector.

In some embodiments, the backup protector is a first backup protector, the surge protector is a first surge protector, the first backup protector and the first surge protector constitute a first phase protection unit, and the lightning protection device further includes a second phase protection unit and a current converging component, the second phase protection unit includes a second backup protector and a second surge protector connected via the connecting pin, the second surge protector includes the first housing, the ground side conductive component and the third electrical connector, the current converging component passes through the gap of the third electrical connector of the first surge protector, the third connecting hole on the first housing of the first surge protector, the third connecting hole on the first housing of the second surge protector, and the gap of the third electrical connector of the second surge protector, and contacts the base part of the third electrical connector and the second connecting part.

In some embodiments, the second housing is provided with a fourth connecting hole corresponding to the third connecting hole, and the current converging component further passes through the fourth connecting hole.

In some embodiments, the first side of the base part is provided with at least two first connecting parts, and the bent part is connected to a position of the first side of the base part between adjacent first connecting parts.

In some embodiments, a surface of the second connecting part facing the base part is provided with a protrusion.

In a second aspect of the disclosure, there is provided a surge protector including: a first housing provided with a first connecting hole; a first electrical connector disposed in the first housing and including a first connecting component, a second connecting component and a third connecting component, wherein the first connecting component includes a base part and first connecting parts disposed on two opposite sides of the base part, the second connecting component includes a bent part and a second connecting part, an end of the bent part is connected to a first side of the base part, the other end of the bent part is connected to the second connecting part, a gap is formed between the second connecting part and a surface of the base part facing away from the first connecting parts, the gap is located at a position corresponding to the first connecting hole, and the third connecting component is connected to an end of the second connecting part away from the bent part and extends in a direction from the second connecting part to the base part; and a first live wire side conductive component disposed in the first housing and plugged into the first connecting component.

In some embodiments, the surge protector further includes a cover covering the first connecting hole and removable from the first connecting hole.

In some embodiments, the surge protector further includes a third electrical connector, a ground side conductive component and a ground component, wherein the third electrical connector includes a first connecting component, a second connecting component and a third connecting component, the first connecting component includes a base part and first connecting parts disposed on two opposite sides of the base part, the second connecting component includes a bent part and a second connecting part, an end of the bent part is connected to a first side of the base part, the other end of the bent part is connected to the second connecting part, a gap is formed between the second connecting part and a surface of the base part facing away from the first connecting parts, the third connecting component is connected to an end of the second connecting part away from the bent part and extends in a direction from the second connecting part to the base part, the first connecting component of the third electrical connector is provided for plugging of the ground side conductive component, and the third connecting component of the third electrical connector is connected to the ground component.

In some embodiments, the surge protector further includes an electrical connecting component disposed on a live wire side in the first housing and connected to the third connecting component of the first electrical connector.

In a third aspect of the disclosure, there is provided a backup protector including: a second housing provided with a second connecting hole; a second electrical connector disposed in the second housing and including a first connecting component, a second connecting component and a third connecting component, the first connecting component includes a base part and first connecting parts disposed on two opposite sides of the base part, the second connecting component includes a bent part and a second connecting part, an end of the bent part is connected to a first side of the base part, the other end of the bent part is connected to the second connecting part, a gap is formed between the second connecting part and a surface of the base part facing away from the first connecting parts, wherein the gap is located at a position corresponding to the second connecting hole, and the third connecting component is connected to an end of the second connecting part away from the bent part and extends in a direction from the second connecting part to the base part; and a second live wire side conductive component disposed in the second housing and plugged into the first connecting component.

In some embodiments, the backup protector further includes a cover covering the second connecting hole and removable from the second connecting hole.

In a fourth aspect of the disclosure, there is provided an electrical connector suitable for a surge protector or a backup protector, the electrical connector including: a first connecting component including a base part and first connecting parts disposed on two opposite sides of the base part; a second connecting component including a bent part and a second connecting part, an end of the bent part being connected to a first side of the base part, the other end of the bent part being connected to the second connecting part, a gap being formed between the second connecting part and a surface of the base part facing away from the first connecting parts; and a third connecting component connected to an end of the second connecting part away from the bent part and extending in a direction from the second connecting part to the base part.

In some embodiments, the first side of the base part is provided with at least two first connecting parts, and the bent part is connected to a position of the first side of the base part between adjacent first connecting parts.

In some embodiments, a surface of the second connecting part facing the base part is provided with a protrusion.

According to embodiments of the disclosure, the surge protector and the backup protector can be conveniently connected together by the connecting pin. On the one hand, the tedious operation upon connection through the wires can be avoided, and the cost can be saved. On the other hand, since the surge protector and the backup protector are provided separately, when there is problem with one of the surge protector and the backup protector, it can only replace the part that has the problem without need of replacing the whole product.

It should be understood that the content described in the summary is not intended to limit critical or important features of the embodiments of the disclosure, nor is it intended to limit the scope of the disclosure. Other features of the disclosure will become readily understood from the following description.

### BRIEF DESCRIPTION OF DRAWINGS

The above and other features, advantages, and aspects of various embodiments of the disclosure will become more apparent from the following detailed description taken in conjunction with the accompanying drawings. In the drawings, the same or similar reference numbers refer to the same or similar elements, wherein:
FIG. 1 shows a schematic structural diagram of a lightning protection device according to an embodiment of the disclosure;
FIG. 2 shows a schematic structural diagram of a surge protector according to an embodiment of the disclosure;
FIG. 3 shows a schematic diagram of an internal structure of the surge protector shown in FIG. 2;
FIG. 4 shows a schematic structural diagram of an electrical connector according to an embodiment of the disclosure;
FIG. 5 shows a schematic structural diagram of a backup protector according to an embodiment of the disclosure;
FIG. 6 shows a schematic assembling diagram of a backup protector and a connecting pin according to an embodiment of the disclosure;
FIG. 7 shows a schematic diagram of an internal structure of a surge protector according to another embodiment of the disclosure;
FIG. 8 shows a schematic structural diagram of a lightning protection device according to another embodiment of the disclosure;
FIG. 9 shows an schematic explosive view of the lightning protection device shown in FIG. 8;
FIG. 10 shows a schematic diagram of an internal structure of a first surge protector in the lightning protection device shown in FIG. 9; and
FIG. 11 shows a schematic structural diagram of a current converging component according to an embodiment of the disclosure.

### Description of reference numerals:

10 electrical connector; 101 first electrical connector; 102 third electrical connector; 11 first connecting component; 111 base part; 112 first connecting part; 12 second connecting component; 121 bent part; 122 second connecting part; 1221 protrusion; 123 gap; 13 third connecting component; 3 surge protector; 310 first surge protector; 320 second surge protector; 30 first housing; 301 first connecting hole; 302 third connecting hole; 303 wiring hole; 31 first live wire side conductive component; 32 ground side conductive component; 2 backup protector; 210 first backup protector; 220 second backup protector; 20 second housing; 201 second connecting hole; 202 fourth connecting hole; 33 ground component; 34 electrical connecting component; 4 connecting pin; 5 current converging component; 100 lightning protection device; 110 first phase protection unit; 120 second phase protection unit.

### DETAILED DESCRIPTION

Preferred embodiments of the disclosure will be described in more detail below with reference to the accompanying drawings. While the preferred embodiments of the disclosure are shown in the drawings, it should be understood that the disclosure may be implemented in various forms and should not be limited by the embodiments set forth herein. Rather, these embodiments are provided to make this disclosure more thorough and complete, and to fully convey the scope of the disclosure to those skilled in the art.

As used herein, the term "comprising" and variations thereof represent openness, i.e., "including but not limited to". Unless specifically stated, the term "or" means "and/or". The term "based on" means "based at least in part on". The terms "an example embodiment" and "an embodiment" mean "at least one example embodiment". The term "another embodiment" means "at least one further embodiment". The terms "first," "second," and the like may refer to different or identical objects.

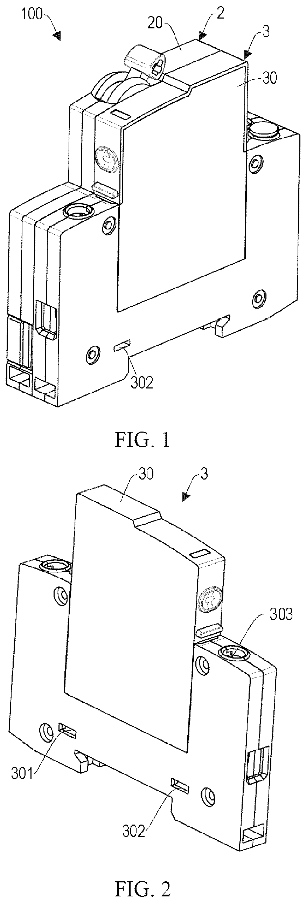

As described above, connecting the SSD with the SPD via the wire increases the product cost and is inconvenient to use, and the formation of the SSD and the SPD into an integral product limits the use flexibility of the product, and when there is a problem with one of the SSD and the SPD, the SSD and the SPD can only be replaced as a whole, and the part that has the problem cannot be replaced separately. According to the embodiments of the disclosure, by providing an electrical connector in at least one of the surge protector and the backup protector, the connection of the surge protector and the backup protector can be conveniently realized by using a connecting pin in a plugging manner. On the one hand, the tedious operation upon connection through the wires can be avoided, and the cost can be saved. On the other hand, since the surge protector and the backup protector are provided separately, when there is problem with one of the surge protector and the backup protector, it can only replace the part that has the problem without need of replacing the whole product. The principle of the disclosure will be described below with reference to FIGS. 1 11.

FIG. 1 shows a schematic structural diagram of a lightning protection device according to an embodiment of the disclosure. As shown in FIG. 1, the lightning protection device 100 described herein generally includes a surge protector 3 and a backup protector 2. The surge protector 3 and the backup protector 2 are in a state assembled with each other. The combination of surge protector 3 and backup protector 2 may form a 1P lightning protection device connected to a pole of a line. In the embodiments of the disclosure, the surge protector 3 and the backup protector 2 can be conveniently assembled together, or can be conveniently separated from each other, which will be described in detail hereinafter.

As shown in FIG. 1, the surge protector 3 includes a first housing 30. Other components of the surge protector 3 may be disposed in or connected to the first housing 30. The backup protector 2 includes a second housing 20. Other components of the backup protector 2 may be disposed in the second housing 20 or on the second housing 20.

In order to achieve the assembling of the surge protector 3 and the backup protector 2, an electrical connector may be provided in at least one of the surge protector 3 and the backup protector 2. Hereafter, the assembling manner of the surge protector 3 and the backup protector 2 will be described by using an example in which the electrical connector is disposed in the surge protector 3. It should be understood that the assembling of the surge protector 3 and the backup protector 2 may also be achieved by disposing the electrical connector in the backup protector 2 separately or disposing the electrical connecter in both the surge protector 3 and the backup protector 2, which will be described in further detail below.

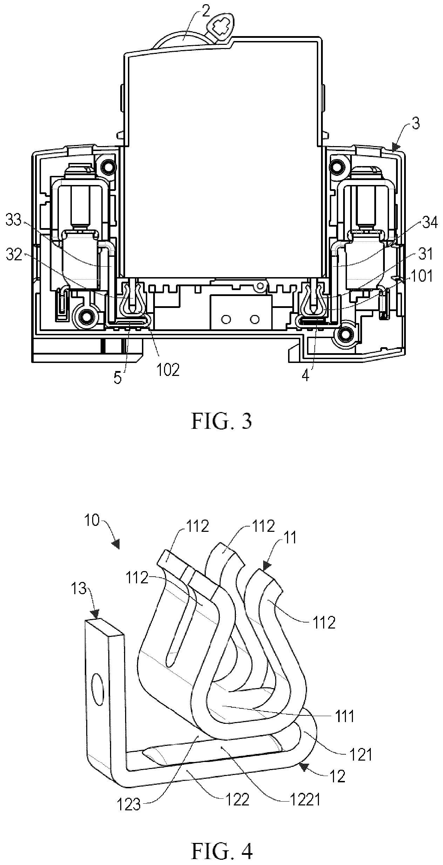

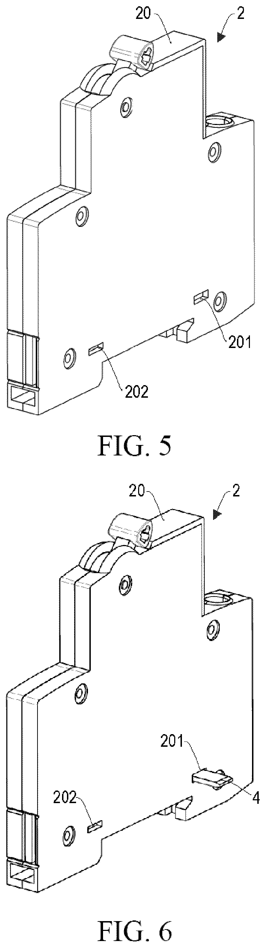

FIG. 2 shows a schematic structural diagram of a surge protector 3 according to an embodiment of the disclosure, FIG. 3 shows a schematic diagram of an internal structure of the surge protector 3 shown in FIG. 2, FIG. 4 shows a schematic structural diagram of an electrical connector 10 according to an embodiment of the disclosure, FIG. 5 shows a schematic structural diagram of a backup protector 2 according to an embodiment of the disclosure, and FIG. 6 shows an assembling schematic diagram of a backup protector 2 and a connecting pin 4 according to an embodiment of the disclosure.

In an embodiment, as shown in FIG. 2, a side of the first housing 30 facing the backup protector 2 is provided with a first connecting hole 301 located on a live wire side of the surge protector 3. Correspondingly, as shown in FIG. 5, a side of the second housing 20 facing the surge protector 3 is provided with a second connecting hole 201 corresponding to the first connecting hole 301, and the second connecting hole 201 is located on the live wire side of the backup protector 2. With the surge protector 3 and the backup protector 2 assembled together, the first connecting hole 301 and the second connecting hole 201 are substantially aligned. The electrical connection between the live wire side of the surge protector 3 and the live wire side of the backup protector 2 may be achieved by a connecting pin 4 passing through the first connecting hole 301 and the second connecting hole 201.

In an embodiment, as shown in FIG. 6, the connecting pin 4 is disposed in the second connecting hole 201. An end of the connecting pin 4 is disposed in the second housing 20 for electrical connection with the live wire side of the backup protector 2. The other end of the connecting pin 4 extends out of the second housing 20 for electrical connection with the live wire side of the surge protector 3. Herein, for ease of description, an end of the connecting pin 4 for electrical connecting with the backup protector 2 may also be referred to as a first end of the connecting pin 4, and an end of the connecting pin 4 for electrical connecting with the surge protector 3 may also be referred to as a second end of the connecting pin 4.

In an embodiment, the first end of the connecting pin 4 may be directly or indirectly fixedly connected to the live wire side conductive component of the backup protector 2 via an intermediate connection. In other words, the connecting pin 4 may be integrally formed directly on the backup protector 2 and the second end of the connecting pin 4 extends out of the second housing 20. A second end of the connecting pin 4 may be plugged into the first connecting hole 301 on the surge protector 3 and electrically connected to the live wire side of the surge protector 3. In an embodiment, the surge protector 3 includes a cover that covers the first connecting hole 301 and is removable from the first connecting hole 301. When the surge protector 3 needs to be assembled with the backup protector 2, the cover may be torn away from the first connecting hole 301, and the second end of the connecting pin 4 may be inserted into the first connecting hole 301. When the surge protector 3 is used separately, the cover may cover the first connecting hole 301.

To connect the second end of the connecting pin 4 to the live wire side of the surge protector 3, a first electrical connector 101 may be provided in the surge protector 3, as shown in FIG. 3. The first electrical connector 101 is disposed on the live wire side of the surge protector 3 and is electrically connected to the first live wire side conductive component 31 of the surge protector 3. With the second end of the connecting pin 4 plugged into the first connecting hole 301 on the surge protector 3, the second end of the connecting pin 4 may be electrically connected to the first electrical connector 101. The first electrical connector 101 may adopt the structure of the electrical connector 10 shown in FIG. 4.

In an embodiment, as shown in FIG. 4, the electrical connector 10 includes a first connecting component 11, a second connecting component 12, and a third connecting component 13. The first connecting component 11 is configured to be connected to the first live wire side conductive component 31 of the surge protector 3. The second connecting component 12 is configured to be connected to the second end of the connecting pin 4. The third connecting component 13 is configured to be connected to the electrical connecting component 34 disposed on the live wire side of the surge protector 3. The first connecting component 11 includes a base part 111 and first connecting parts 112 disposed on two opposite sides of the base part 111. The first live wire side conductive component 31 may be inserted between and in contact with the first connecting parts 112 disposed on both sides of the base part 111 to achieve an electrical connection between the first connecting component 11 and the first live wire side conductive component 31. The second connecting component 12 includes a bent part 121 and a second connecting part 122. An end of the bent part 121 is connected to the first side of the base part 111. The other end of the bent part 121 is connected to the second connecting part 122. A gap 123 is formed between the second connecting part 122 and a surface of the base part 111 facing away from the first connecting parts 112. With reference to FIGS. 2-6, the gap 123 is located at a position corresponding to the first connecting hole 301, and when the second end of the connecting pin 4 is plugged into the first connecting hole 301 on the surge protector 3, the second end of the connecting pin 4 may be inserted into the gap 123 and is in contact with the base part 111 and the second connecting part 122, thereby realizing the electrical connection between the connecting pin 4 and the first electrical connector 101. The distance of the gap 123 is controllable and may be selected appropriately as needed. The third connecting component 13 is connected to an end of the second connecting part 122 away from the bent part 121 and extends substantially along a direction from the second connecting part 122 to the base part 111. The third connecting component 13 may be connected to the electrical connecting component 34 by welding or any available connection way.

When the surge protector 3 is used separately, the electrical connecting component 34 may be wired via a wiring hole 303 of the first housing 30 corresponding to the electrical connecting component 34. When the surge protector 3 and the backup protector 2 need to be assembled, the electrical connecting component 34 does not need to be wired through the wiring hole 303, and only the first electrical connector 101 needs to be connected by using the connecting pin 4.

In an embodiment, as shown in FIGS. 3 and 4, the bent part 121 may be generally U-shaped. It should be understood that the bent part 121 may have other shapes as long as the base part 111 and the second connecting part 122 can be connected and the gap 123 can be formed between the second connecting part 122 and the base part 111.

In an embodiment, as shown in FIG. 4, two first connecting parts 112 are disposed on the first side of the base part 111, and the bent part 121 is connected to a position of the first side of the base part 111 between the two first connecting parts 112. In some embodiments, more than two first connecting parts 112 may be disposed on the first side of the base part 111, and the bent part 121 is connected to a position between the adjacent first connecting parts 112 on the first side of the base part 111. When the first live wire side conductive component 31 is inserted into the first connecting component 11, it may contact each of the first connecting parts 112 to improve connection reliability.

In an embodiment, as shown in FIG. 4, two first connecting parts 112 are disposed on a second side of the base part 111 opposite to the first side, and the two first connecting parts 112 on the second side of the base part 111 correspond to the two first connecting parts 112 on the first side of the base part 111. In some embodiments, in a case where more than two first connecting parts 112 are disposed on the first side of the base part 111, more than two first connecting parts 112 may be correspondingly disposed on the second side of the base part 111, and more than two first connecting parts 112 on the second side of the base part 111 are in one-to-one correspondence with more than two first connecting parts 112 on the first side of the base part 111.

In an embodiment, as shown in FIG. 4, a protrusion 1221 is provided on a surface of the second connecting part 122 facing the base part 111. With the second end of the connecting pin 4 plugged into the first connecting hole 301 on the surge protector 3, the second end of the connecting pin 4 may be inserted into the gap 123 and in contact with the base part 111 and the protrusion 1221. With this arrangement, the second end of the connecting pin 4 can be brought into close contact with the protruding portion 1221, thereby improving the connection reliability between the second end of the connecting pin 4 and the first electrical connector 101.

In some embodiments, as shown in FIG. 4, the third connecting component 13 of the first electrical connector 101 is substantially perpendicular to the second connecting part 122. It should be understood that, depending on the arrangement orientation of the electrical connecting component 34, it is also possible that the third connecting component 13 is disposed in other direction relative to the second connecting part 122. In some embodiments, as shown in FIG. 3, the ground side of the surge protector 3 is provided with a third electrical connector 102, a ground side conductive component 32 and a ground component 33. The third electrical connector 102 may adopt the structure of the electrical connector 10 shown in FIG. 4. The first connecting component 11 of the third electrical connector 102 is provided for plugging of the ground side conductive component 32. The ground side conductive component 32 may be inserted between the first connecting parts 112 of the third electrical connector 102 disposed on both sides of the base part 111 and in contact with the first connecting parts 112 to achieve an electrical connection between the first connecting component 11 of the third electrical connector 102 and the ground side conductive component 32. The third connecting component 13 of the third electrical connector 102 is connected to the ground component 33. The third connecting component 13 may be connected to the ground component 33 by welding or any feasible connection way.

In some embodiments, as shown in FIG. 4, the third connecting component 13 of the third electrical connector 102 is substantially perpendicular to the second connecting part 122. It should be understood that, depending on the arrangement orientation of the ground component 33, it is also possible that the third connecting component 13 of the third electrical connector 102 is disposed in other direction relative to the second connecting part 122.

As described above, the assembling of the surge protector 3 and the backup protector 2 may also be achieved by disposing the electrical connector in the backup protector 2 separately or disposing the electrical connecter in both the surge protector 3 and the backup protector 2. Hereafter, further description will be given for these two cases.

The case where the electrical connector 10 is provided separately in the backup protector 2 is first described, that is, the electrical connector 10 is only provided on the live wire side of the backup protector 2, and the electrical connector 10 is not provided on the live wire side of the surge protector 3. In this case, the second end of the connecting pin 4 may be directly or indirectly fixedly connected to the live wire side of the surge protector 3 via an intermediate connection. In other words, the connecting pin 4 may be directly integrally formed on the surge protector 3. Similar to the case described above in connection with FIGS. 2-6, the first end of the connecting pin 4 may be plugged into the second connecting hole 201 on the backup protector 2 and electrically connected to the live wire side of the backup protector 2. To connect the first end of the connecting pin 4 to the live wire side of the backup protector 2, a second electrical connector (not shown) may be provided in the backup protector 2. The second electrical connector is disposed on the live wire side of the backup protector 2 and is electrically connected to the second live wire side conductive component (not shown) of the backup protector 2. With the first end of the connecting pin 4 plugged into the second connecting hole 201 on the backup protector 2, the first end of the connecting pin 4 may be electrically connected to the second electrical connector. The second electrical connector may also adopt the structure of the electrical connector 10 shown in FIG. 4.

The second live wire side conductive component of the backup protector 2 may be inserted between and in contact with the first connecting parts 112 of the second electrical connector disposed on both sides of the base part 111 to achieve an electrical connection between the first connecting component 11 and the second live wire side conductive component of the second electrical connector. The gap 123 of the second electrical connector is disposed at a position corresponding to the second connecting hole 201. With the first end of the connecting pin 4 plugged into the second connecting hole 201 on the backup protector 2, the first end of the connecting pin 4 may be inserted into the gap 123 of the second electrical connector and in contact with the base part 111 and the second connecting part 122 of the second electrical connector, thereby achieving an electrical connection between the connecting pin 4 and the second electrical connector. In this way, the surge protector 3 and the backup protector 2 can be conveniently assembled together.

In an embodiment, the backup protector 2 includes a cover that covers the second connecting hole 201 and is removable from the second connecting hole 201. When the surge protector 3 needs to be assembled with the backup protector 2, the cover may be torn away from the second connecting hole 201, and the first end of the connecting pin 4 may be inserted into the second connecting hole 201. In the case where the backup protector 2 is used separately, the cover may cover the second connecting hole 201.

The following describes the case in which the electrical connector 10 is provided in both the surge protector 3 and the backup protector 2. In this case, the surge protector 3 may be provided with the first electrical connector 101 as described above, and the backup protector 2 may be provided with the second electrical connector as described above. When assembling the surge protector 3 and the backup protector 2, the first end of the connecting pin 4 may be inserted into the second connecting hole 201 on the backup protector 2, and the second end of the connecting pin 4 may be inserted into the first connecting hole 301 on the surge protector 3. The first end of the connecting pin 4 may extend into the gap 123 on the second electrical connector and be in contact with the base part 111 and the second connecting part 122 of the second electrical connector. The second end of the connecting pin 4 may extend into the gap 123 on the first electrical connector 101 and be in contact with the base part 111 and the second connecting part 122 of the first electrical connector 101. In this way, the surge protector 3 and the backup protector 2 may also be conveniently assembled together.

In an embodiment, the first connecting hole 301 and the second connecting hole 201 may both be provided with a covering component. When the surge protector 3 needs to be assembled with the backup protector 2, the cover can be torn off from the first connecting hole 301 and the second connecting hole 201, and two ends of the connecting pin 4 are respectively inserted into the first connecting hole 301 and the second connecting hole 201.

In some embodiments, slots (not shown) are respectively disposed at corresponding positions on the first housing 30 and the second housing 20. After connecting the surge protector 3 with the backup protector 2 by using the connecting pin 4, the surge protector 3 and the backup protector 2 may be assembled together by clamping a hook in the slot. In this way, the surge protector 3 and the backup protector 2 can be conveniently and reliably fixed together. It should be understood that other fixing manners are feasible, such as by screws, which is not limited in the embodiments of the disclosure.

According to the embodiments of the disclosure, by using the electrical connector 10 having the first connecting component 11 and the second connecting component 12, the surge protector 3 and the backup protector 2 can be conveniently connected, so that the user can select the required surge protector 3 and the backup protector 2 for flexible assembling according to requirements.

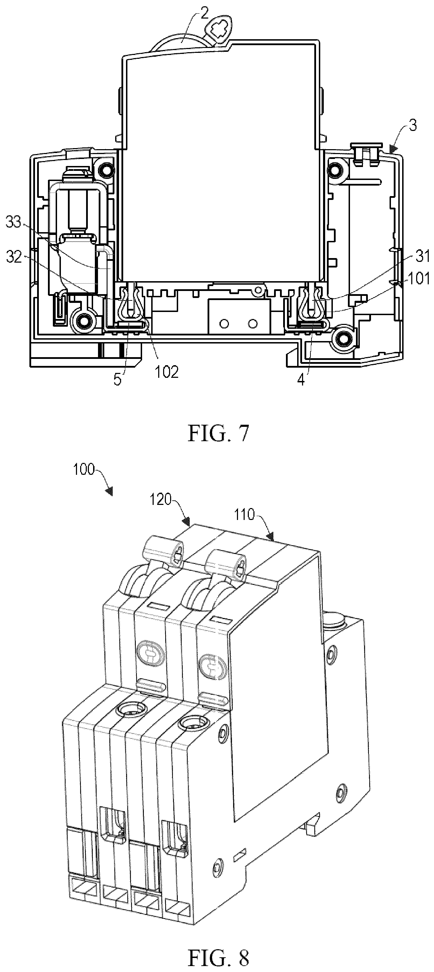

FIG. 7 shows a schematic diagram of an internal structure of a surge protector 3 according to another embodiment of the disclosure. The structure of the surge protector 3 shown in FIG. 7 is similar to that of the surge protector 3 shown in FIG. 3, except that the electrical connecting component 34 is not provided in the surge protector 3 shown in FIG. 7, and the arrangement of the first electrical connector 101 is different from the surge protector 3 shown in FIG. 3. Only differences between them will be described in detail below, and the same parts will not be repeated.

As shown in FIG. 7, the first electrical connector 101 is disposed on the live wire side of the surge protector 3, and the first connecting component 11 thereof is electrically connected to the first live wire side conductive component 31 of the surge protector 3. With the second end of the connecting pin 4 plugged into the first connecting hole 301 on the surge protector 3, the second end of the connecting pin 4 may be inserted into the gap 123 between the first connecting component 11 and the second connecting component 12 of the first electrical connector 101. The third connecting component 13 of the first electrical connector 101 is not used in this embodiment, i.e., is not electrically connected to other components. With such an embodiment, the surge protector 3 and the backup protector 2 may also be conveniently assembled together using a connecting pin 4.

The lightning protection device 100 described above in connection with FIGS. 1-6 is a 1P lightning protection device for connecting to one pole of the line. In some embodiments, multiple poles of the line need to be connected to the lightning protection device. In this case, the lightning protection device 100 may include multiple sets of surge protectors 3 and backup protectors 2, where each set of surge protectors 3 and backup protectors 2 may be assembled together in the manner described in connection with FIGS. 1-6 and connected to the respective one pole of the line. When the lightning protection device 100 includes two sets of surge protectors 3 and backup protectors 2, the lightning protection device 100 may be referred to as a 2P lightning protection device, and when the lightning protection device 100 includes three sets of surge protectors 3 and backup protectors 2, the lightning protection device 100 may be referred to as a 3P lightning protection device, and the like.

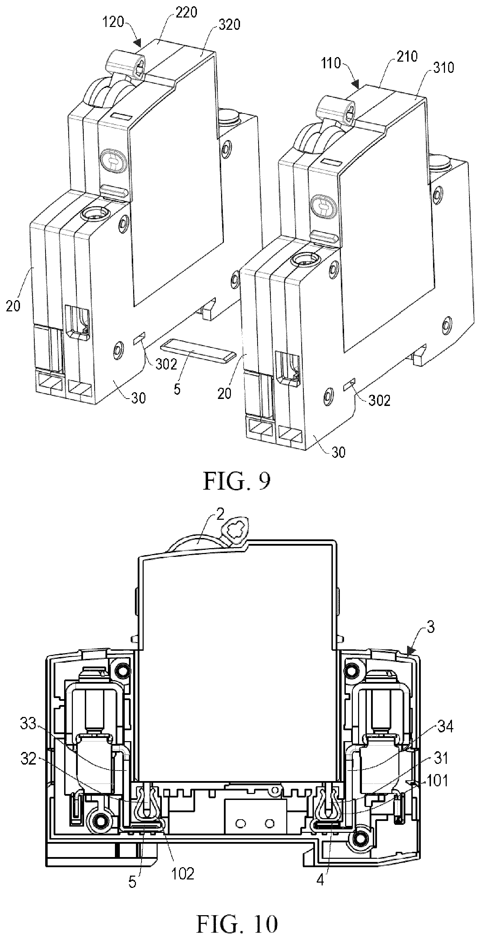

In the following, a case in which the lightning protection device 100 includes two sets of surge protectors 3 and backup protectors 2 is used as an example to describe an assembling manner of the plurality of sets of surge protectors 3 and backup protectors 2, as shown in FIGS. 8 to 11. It should be understood that the plurality of sets of surge protectors 3 and backup protectors 2 may be assembled in a similar manner, which will not be described in detail herein again.

In some embodiments, as shown in FIGS. 8 to 11, the first backup protector 210 and the first surge protector 310 may constitute a first phase protection unit 110 by using the assembling manner described above for connecting one pole of the line. The second backup protector 220 and the second surge protector 320 may constitute a second phase protection unit 120 by using the assembling manner described above for connecting the other pole of the line. The first backup protector 210 and the second backup protector 220 may adopt the structure of the backup protector 2 described above. One of the first surge protector 310 and the second surge protector 320 may adopt the structure of the surge protector 3 described above. The other of the first surge protector 310 and the second surge protector 320 may employ a structure similar to the surge protector 3 described above, except that the ground component 33 need not be provided. The ground side of the first surge protector 310 may be electrically connected to the ground side of the second surge protector 320 via the current converging component 5.

It should be understood that, in the case where the lightning protection device 10 includes the plurality of sets of surge protectors 3 and backup protectors 2, since the current converging component 5 is used to electrically connect the ground side of each surge protector 3, only one of the surge protectors 3 needs to be provided with the ground component 33 to realize the current discharge without disposing the ground component 33 in each surge protector.

In an embodiment, with reference to FIGS. 1, 2 and 9, a third connecting hole 302 is provided on a side of the first housing 30 of the first surge protector 310 facing the first backup protector 210, and the third connecting hole 302 is located at a position corresponding to the gap 123 of the third electrical connector 102 of the first surge protector 310. A side of the first housing 30 of the second surge protector 320 facing away from the second backup protector 220 is provided with a third connecting hole 302 located at a position corresponding to the gap 123 of the third electrical connector 102 of the second surge protector 320. With reference to FIGS. 5, 6 and 9, fourth connecting holes 202 are disposed on two opposite sides of the second housing 20 of the first backup protector 210, and the fourth connecting hole 202 is disposed at a position corresponding to the third connecting hole 302.

When the first phase protection unit 110 and the second phase protection unit 120 are assembled together, an end of the current converging component 5 may be inserted into the gap 123 of the third electrical connector 102 in the second surge protector 320 via the third connecting hole 302 on the second surge protector 320 and in contact with the base part 111 and the second connecting part 122. The other end of the current converging component 5 may pass through the fourth connecting hole 202 on the first backup protector 210 and be inserted into the gap 123 of the third electrical connector 102 in the first surge protector 310 via the third connecting hole 302 on the first surge protector 310 and in contact with the base part 111 and the second connecting part 122. With this arrangement, the electrical connection between ground sides of different phase protection units is achieved. In addition, since the third connecting component 13 of the third electrical connector 102 of the first surge protector 310 is electrically connected to the ground component 33, the ground side of each phase protection unit can be electrically connected to the ground component 33.

In some embodiments, a side of the first housing 30 of the first surge protector 310 facing away from the first backup protector 210 may also be provided with a third connecting hole 302, so as to further connect the one or more phase protection units on the right side of the first surge protector 310 by using the current converging component 5.

In some embodiments, a side of the first housing 30 of the second surge protector 320 facing the second backup protector 220 may also be provided with a third connecting hole 302, and the opposite sides of the second housing 20 of the second backup protector 220 are also provided with fourth connecting holes 202, so as to further connect the one or more phase protection units on the left side of the second backup protector 220 by using the current converging component 5.

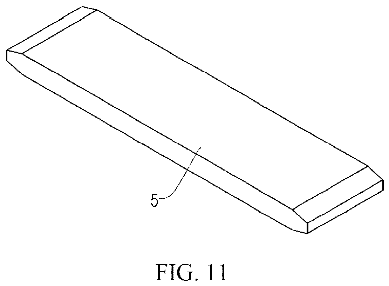

In an embodiment, as shown in FIG. 11, the current converging component 5 is generally a sheet-like structure. The size of both ends of the current converging component 5 may be slightly smaller than the size of the intermediate portion for easier insertion into the respective connecting hole.

## Claims

1. A lightning protection device (100) comprising a surge protector (3) and a backup protector (2), wherein
the surge protector (3) comprises: a first housing (30), a side of the first housing (30) facing the backup protector (2) being provided with a first connecting hole (301); and a first live wire side conductive component (31) disposed in the first housing (30);
the backup protector (2) comprises: a second housing (20), a side of the second housing (20) facing the surge protector (3) being provided with a second connecting hole (201) corresponding to the first connecting hole (301); and a second live wire side conductive component disposed in the second housing (20);
at least one of the backup protector (2) and the surge protector (3) further comprises an electrical connector (10) disposed in the respective housing and electrically connected to the respective live wire side conductive component, the electrical connector (10) comprises a first connecting component (11), a second connecting component (12) and a third connecting component (13), the first connecting component (11) comprises a base part (111) and first connecting parts (112) disposed on two opposite sides of the base part (111), the second connecting component (12) comprises a second connecting part (122),
**characterized in that**,
the second connecting component (12) further comprises a bent part (121), an end of the bent part (121) is connected to a first side of the base part (111), the other end of the bent part (121) is connected to the second connecting part (122), a gap (123) is formed between the second connecting part (122) and a surface of the base part (111) facing away from the first connecting parts (112), the gap (123) is located at a position corresponding to the respective connecting hole,
the surge protector (3) and the backup protector (2) are capable of being connected via a connecting pin (4), wherein
the connecting pin (4) passes through the first connecting hole (301) and the second connecting hole (201) and is plugged into the electrical connector (10), wherein the connecting pin (4) passes through the first connecting hole (301) and the second connecting hole (201) and is inserted into the gap (123) to be in contact with the base part (111) and the second connecting part (122), and
the first connecting component (11) is provided for plugging of the respective live wire side conductive component, and the third connecting component (13) is connected to an end of the second connecting part (122) away from the bent part (121) and extends in a direction from the second connecting part (122) to the base part (111).

2. The lightning protection device (100) according to claim 1, wherein the surge protector (3) comprises a first electrical connector (101), the backup protector (2) comprises a second electrical connector, the first electrical connector (101) and the second electrical connector are respectively configured as the electrical connector (10), an end of the connecting pin (4) is inserted into the gap (123) of the first electrical connector (101), and the other end of the connecting pin (4) is inserted into the gap (123) of the second electrical connector.

3. The lightning protection device (100) according to claim 1, wherein the surge protector (3) comprises a first electrical connector (101) configured as the electrical connector (10), an end of the connecting pin (4) is inserted into the gap (123) of the first electrical connector (101), and the other end of the connecting pin (4) is fixedly connected to the backup protector (2) and is electrically connected to the second live wire side conductive component.

4. The lightning protection device (100) according to claim 2 or claim 3, wherein the surge protector (3) further comprises an electrical connecting component (34) disposed on a live wire side, and the third connecting component (13) of the first electrical connector (101) is connected to the electrical connecting component (34).

5. The lightning protection device (100) according to claim 1, wherein the backup protector (2) comprises a second electrical connector configured as the electrical connector (10), an end of the connecting pin (4) is inserted into the gap (123) of the second electrical connector, and the other end of the connecting pin (4) is fixedly connected to the surge protector (3) and electrically connected to the first live wire side conductive component (31).

6. The lightning protection device (100) according to claim 1, wherein the surge protector (3) further comprises a third electrical connector (102), a ground side conductive component (32) and a ground component (33), the third electrical connector (102) is configured as the electrical connector (10), the first connecting component (11) of the third electrical connector (102) is provided for plugging of the ground side conductive component (32), and the third connecting component (13) of the third electrical connector (102) is connected to the ground component (33).

7. The lightning protection device (100) according to claim 6, wherein a third connecting hole (302) is provided on the first housing (30) at a position corresponding to the gap (123) of the third electrical connector (102).

8. The lightning protection device (100) according to claim 7, wherein the backup protector (2) is a first backup protector (210), the surge protector (3) is a first surge protector (310), the first backup protector (210) and the first surge protector (310) constitute a first phase protection unit (110), and the lightning protection device (100) further comprises a second phase protection unit (120) and a current converging component (5), the second phase protection unit (120) comprises a second backup protector (220) and a second surge protector (320) connected via the connecting pin (4),
the second surge protector (320) comprises the first housing (30), the ground side conductive component (32) and the third electrical connector (102), the current converging component (5) passes through the gap (123) of the third electrical connector (102) of the first surge protector (310), the third connecting hole (302) on the first housing (30) of the first surge protector (310), the third connecting hole (302) on the first housing (30) of the second surge protector (320), and the gap (123) of the third electrical connector (102) of the second surge protector (320), and contacts the base part (111) of the third electrical connector (102) and the second connecting part (122).

9. The lightning protection device (100) according to claim 8, wherein the second housing (20) is provided with a fourth connecting hole (202) corresponding to the third connecting hole (302), and the current converging component (5) further passes through the fourth connecting hole (202).

10. The lightning protection device (100) according to claim 1, wherein the first side of the base part (111) is provided with at least two first connecting parts (112), and the bent part (121) is connected to a position of the first side of the base part (111) between adjacent first connecting parts (112).

11. The lightning protection device (100) according to claim 1, wherein a surface of the second connecting part (122) facing the base part (111) is provided with a protrusion (1221).

12. A surge protector (3) comprising:
a first housing (30) provided with a first connecting hole (301);
a first electrical connector (101) disposed in the first housing (30) and comprising a first connecting component (11), a second connecting component (12) and a third connecting component (13), wherein the first connecting component (11) comprises a base part (111) and first connecting parts (112) disposed on two opposite sides of the base part (111), the second connecting component (12) comprises a second connecting part (122); and
a first live wire side conductive component (31) disposed in the first housing (30) and plugged into the first connecting component (11),
**characterized in that**,
the second connecting component (12) further comprises a bent part (121), an end of the bent part (121) is connected to a first side of the base part (111), the other end of the bent part (121) is connected to the second connecting part (122), a gap (123) is formed between the second connecting part (122) and a surface of the base part (111) facing away from the first connecting parts (112), the gap (123) is located at a position corresponding to the first connecting hole (301), and the third connecting component (13) is connected to an end of the second connecting part (122) away from the bent part (121) and extends in a direction from the second connecting part (122) to the base part (111).

13. The surge protector (3) according to claim 12, further comprising a cover covering the first connecting hole (301) and removable from the first connecting hole (301).

14. The surge protector (3) according to claim 12, further comprising a third electrical connector (102), a ground side conductive component (32) and a ground component (33), wherein the third electrical connector (102) comprises a first connecting component (11), a second connecting component (12) and a third connecting component (13), the first connecting component (11) comprises a base part (111) and first connecting parts (112) disposed on two opposite sides of the base part (111), the second connecting component (12) comprises a bent part (121) and a second connecting part (122), an end of the bent part (121) is connected to a first side of the base part (111), the other end of the bent part (121) is connected to the second connecting part (122), a gap (123) is formed between the second connecting part (122) and a surface of the base part (111) facing away from the first connecting parts (112), the third connecting component (13) is connected to an end of the second connecting part (122) away from the bent part (121) and extends in a direction from the second connecting part (122) to the base part (111), the first connecting component (11) of the third electrical connector (102) is provided for plugging of the ground side conductive component (32), and the third connecting component (13) of the third electrical connector (102) is connected to the ground component (33).

15. The surge protector (3) according to claim 12, further comprising: an electrical connecting component (34) disposed on a live wire side in the first housing (30) and connected to the third connecting component (13) of the first electrical connector (101).

16. A backup protector (2) comprising:
a second housing (20) provided with a second connecting hole (201);
a second electrical connector disposed in the second housing (20) and comprising a first connecting component (11), a second connecting component (12) and a third connecting component (13), the first connecting component (11) comprises a base part (111) and first connecting parts (112) disposed on two opposite sides of the base part (111), the second connecting component (12) comprises a second connecting part (122); and
a second live wire side conductive component disposed in the second housing (20) and plugged into the first connecting component (11),
**characterized in that**,
the second connecting component (12) further comprises a bent part (121), an end of the bent part (121) is connected to a first side of the base part (111), the other end of the bent part (121) is connected to the second connecting part (122), a gap (123) is formed between the second connecting part (122) and a surface of the base part (111) facing away from the first connecting parts (112), wherein the gap (123) is located at a position corresponding to the second connecting hole (201), and the third connecting component (13) is connected to an end of the second connecting part (122) away from the bent part (121) and extends in a direction from the second connecting part (122) to the base part (111).

17. The backup protector (2) according to claim 16, further comprising a cover covering the second connecting hole (201) and removable from the second connecting hole (201).

18. An electrical connector (10) suitable for a surge protector (3) or a backup protector (2), comprising a first connecting component (11), a second connecting component (12), and a third connecting component (13), the first connecting component (11) comprising a base part (111) and first connecting parts (112) disposed on two opposite sides of the base part (111), and the second connecting component (12) comprising a second connecting part (122),
**characterized in that**,
the second connecting component (12) further comprises a bent part (121), an end of the bent part (121) is connected to a first side of the base part (111), the other end of the bent part (121) is connected to the second connecting part (122), a gap (123) is formed between the second connecting part (122) and a surface of the base part (111) facing away from the first connecting parts (112); and
the third connecting component (13) is connected to an end of the second connecting part (122) away from the bent part (121) and extends in a direction from the second connecting part (122) to the base part (111).

19. The electrical connector (10) according to claim 18, wherein the first side of the base part (111) is provided with at least two first connecting parts (112), and the bent part (121) is connected to a position of the first side of the base part (111) between adjacent first connecting parts (112).

20. The electrical connector (10) according to claim 18, wherein a surface of the second connecting part (122) facing the base part (111) is provided with a protrusion (1221).

## Patentansprüche

1. Blitzschutzvorrichtung (100) mit einem Überspannungsschutz (3) und einem Backupschutz (2), wobei
der Überspannungsschutz (3) umfasst: ein erstes Gehäuse (30), wobei eine dem Backupschutz (2) zugewandte Seite des ersten Gehäuses (30) mit einer ersten Verbindungsöffnung (301) versehen ist; und eine erste leitfähige Komponente (31) der stromführenden Seite, die in dem ersten Gehäuse (30) angeordnet ist;
der Backupschutz (2) umfasst: ein zweites Gehäuse (20), wobei eine dem Überspannungsschutz (3) zugewandte Seite des zweiten Gehäuses (20) mit einer zweiten Verbindungsöffnung (201) versehen ist, die der ersten Verbindungsöffnung (301) entspricht; und eine zweite leitfähige Komponente der stromführenden Seite, die in dem zweiten Gehäuse (20) angeordnet ist;
mindestens eines von dem Backupschutz (2) oder dem Überspannungsschutz (3) ferner einen elektrischen Verbinder (10) umfasst, der in dem jeweiligen Gehäuse angeordnet und elektrisch mit der jeweiligen leitfähigen Komponente der stromführenden Seite verbunden ist, wobei der elektrische Verbinder (10) eine erste Verbindungskomponente (11), eine zweite Verbindungskomponente (12) und eine dritte Verbindungskomponente (13) umfasst, wobei die erste Verbindungskomponente (11) ein Basisteil (111) und erste Verbindungsteile (112) umfasst, die an zwei gegenüberliegenden Seiten des Basisteils (111) angeordnet sind, wobei die zweite Verbindungskomponente (12) ein zweites Verbindungsteil (122) umfasst,
**dadurch gekennzeichnet, dass**
die zweite Verbindungskomponente (12) ferner ein gebogenes Teil (121) umfasst, ein Ende des gebogenen Teils (121) mit einer ersten Seite des Basisteils (111) verbunden ist, das andere Ende des gebogenen Teils (121) mit dem zweiten Verbindungsteil (122) verbunden ist, zwischen dem zweiten Verbindungsteil (122) und einer von den ersten Verbindungsteilen (112) abgewandten Oberfläche des Basisteils (111) ein Spalt (123) gebildet ist, der Spalt (123) an einer Position angeordnet ist, die der jeweiligen Verbindungsöffnung entspricht,
der Überspannungsschutz (3) und der Backupschutz (2) über einen Verbindungsstift (4) miteinander verbindbar sind, wobei der Verbindungsstift (4) durch die erste Verbindungsöffnung (301) und die zweite Verbindungsöffnung (201) verläuft und in den elektrischen Verbinder (10) eingesteckt wird, wobei der Verbindungsstift (4) durch die erste Verbindungsöffnung (301) und die zweite Verbindungsöffnung (201) verläuft und in den Spalt (123) eingeführt wird, um mit dem Basisteil (111) und dem zweiten Verbindungsteil (122) in Kontakt zu stehen, und
wobei die erste Verbindungskomponente (11) zum Einstecken der jeweiligen leitfähigen Komponente der stromführenden Seite vorgesehen ist und die dritte Verbindungskomponente (13) mit einem vom gebogenen Teil (121) abgewandten Ende des zweiten Verbindungsteils (122) verbunden ist und sich in einer Richtung vom zweiten Verbindungsteil (122) zum Basisteil (111) erstreckt.

2. Blitzschutzvorrichtung (100) nach Anspruch 1, wobei der Überspannungsschutz (3) einen ersten elektrischen Verbinder (101) umfasst, der Backupschutz (2) einen zweiten elektrischen Verbinder umfasst, der erste elektrische Verbinder (101) und der zweite elektrische Verbinder jeweils als der elektrische Verbinder (10) ausgebildet sind, ein Ende des Verbindungsstifts (4) in den Spalt (123) des ersten elektrischen Verbinders (101) eingeführt ist und das andere Ende des Verbindungsstifts (4) in den Spalt (123) des zweiten elektrischen Verbinders eingeführt ist.

3. Blitzschutzvorrichtung (100) nach Anspruch 1, wobei der Überspannungsschutz (3) einen ersten elektrischen Verbinder (101) umfasst, der als der elektrische Verbinder (10) ausgebildet ist, ein Ende des Verbindungsstifts (4) in den Spalt (123) des ersten elektrischen Verbinders (101) eingeführt ist, und das andere Ende des Verbindungsstifts (4) fest mit dem Backupschutz (2) verbunden und elektrisch mit der zweiten leitfähigen Komponente der stromführenden Seite verbunden ist.

4. Blitzschutzvorrichtung (100) nach Anspruch 2 oder Anspruch 3, wobei der Überspannungsschutz (3) ferner eine elektrische Verbindungskomponente (34) umfasst, die auf einer stromführenden Seite angeordnet ist, und die dritte Verbindungskomponente (13) des ersten elektrischen Verbinders (101) mit der elektrischen Verbindungskomponente (34) verbunden ist.

5. Blitzschutzvorrichtung (100) nach Anspruch 1, wobei der Backupschutz (2) einen zweiten elektrischen Verbinder umfasst, der als der elektrische Verbinder (10) ausgebildet ist, ein Ende des Verbindungsstifts (4) in den Spalt (123) des zweiten elektrischen Verbinders eingeführt ist und das andere Ende des Verbindungsstifts (4) fest mit dem Überspannungsschutz (3) verbunden und elektrisch mit der ersten leitfähigen Komponente (31) der stromführenden Seite verbunden ist.

6. Blitzschutzvorrichtung (100) nach Anspruch 1, wobei der Überspannungsschutz (3) ferner einen dritten elektrischen Verbinder (102), eine erdseitige leitfähige Komponente (32) und eine Erdungskomponente (33) umfasst, der dritte elektrische Verbinder (102) als der elektrische Verbinder (10) ausgebildet ist, die erste Verbindungskomponente (11) des dritten elektrischen Verbinders (102) zum Einstecken der erdseitigen leitfähigen Komponente (32) vorgesehen ist und die dritte Verbindungskomponente (13) des dritten elektrischen Verbinders (102) mit der Erdungskomponente (33) verbunden ist.

7. Blitzschutzvorrichtung (100) nach Anspruch 6, wobei an dem ersten Gehäuse (30) an einer Position, die dem Spalt (123) des dritten elektrischen Verbinders (102) entspricht, eine dritte Verbindungsöffnung (302) vorgesehen ist.

8. Blitzschutzvorrichtung (100) nach Anspruch 7, wobei der Backupschutz (2) ein erster Backupschutz (210) ist, der Überspannungsschutz (3) ein erster Überspannungsschutz (310) ist, der erste Backupschutz (210) und der erste Überspannungsschutz (310) eine erste Phasenschutzeinheit (110) bilden, und die Blitzschutzvorrichtung (100) ferner eine zweite Phasenschutzeinheit (120) und eine Stromsammelkomponente (5) umfasst, wobei die zweite Phasenschutzeinheit (120) einen zweiten Backupschutz (220) und einen zweiten Überspannungsschutz (320) umfasst, die über den Verbindungsstift (4) verbunden sind,
wobei der zweite Überspannungsschutz (320) das erste Gehäuse (30), die erdseitige leitfähige Komponente (32) und den dritten elektrischen Verbinder (102) umfasst, wobei die Stromsammelkomponente (5) durch den Spalt (123) des dritten elektrischen Verbinders (102) des ersten Überspannungsschutzes (310), die dritte Verbindungsöffnung (302) am ersten Gehäuse (30) des ersten Überspannungsschutzes (310), die dritte Verbindungsöffnung (302) am ersten Gehäuse (30) des zweiten Überspannungsschutzes (320) sowie den Spalt (123) des dritten elektrischen Verbinders (102) des zweiten Überspannungsschutzes (320) verläuft und das Basisteil (111) des dritten elektrischen Verbinders (102) sowie das zweite Verbindungsteil (122) kontaktiert.

9. Blitzschutzvorrichtung (100) nach Anspruch 8, wobei das zweite Gehäuse (20) mit einer vierten Verbindungsöffnung (202) versehen ist, die der dritten Verbindungsöffnung (302) entspricht, und die Stromsammelkomponente (5) ferner durch die vierte Verbindungsöffnung (202) verläuft.

10. Blitzschutzvorrichtung (100) nach Anspruch 1, wobei die erste Seite des Basisteils (111) mit mindestens zwei ersten Verbindungsteilen (112) versehen ist und das gebogene Teil (121) mit einer Stelle der ersten Seite des Basisteils (111) zwischen benachbarten ersten Verbindungsteilen (112) verbunden ist.

11. Blitzschutzvorrichtung (100) nach Anspruch 1, wobei eine dem Basisteil (111) zugewandte Oberfläche des zweiten Verbindungsteils (122) mit einem Vorsprung (1221) versehen ist.

12. Überspannungsschutz (3), umfassend:
ein erstes Gehäuse (30), das mit einer ersten Verbindungsöffnung (301) versehen ist;
einen ersten elektrischen Verbinder (101), der in dem ersten Gehäuse (30) angeordnet ist und eine erste Verbindungskomponente (11), eine zweite Verbindungskomponente (12) und eine dritte Verbindungskomponente (13) umfasst, wobei die erste Verbindungskomponente (11) ein Basisteil (111) und erste Verbindungsteile (112) umfasst, die an zwei gegenüberliegenden Seiten des Basisteils (111) angeordnet sind, die zweite Verbindungskomponente (12) ein zweites Verbindungsteil (122) umfasst; und
eine erste leitfähige Komponente (31) der stromführenden Seite, die in dem ersten Gehäuse (30) angeordnet und in die erste Verbindungskomponente (11) eingesteckt ist,
**dadurch gekennzeichnet, dass**
die zweite Verbindungskomponente (12) ferner ein gebogenes Teil (121) umfasst, wobei ein Ende des gebogenen Teils (121) mit einer ersten Seite des Basisteils (111) verbunden ist, das andere Ende des gebogenen Teils (121) mit dem zweiten Verbindungsteil (122) verbunden ist, zwischen dem zweiten Verbindungsteil (122) und einer von den ersten Verbindungsteilen (112) abgewandten Oberfläche des Basisteils (111) ein Spalt (123) gebildet ist, der Spalt (123) an einer Position angeordnet ist, die der ersten Verbindungsöffnung (301) entspricht, und die dritte Verbindungskomponente (13) mit einem vom gebogenen Teil (121) abgewandten Ende des zweiten Verbindungsteils (122) verbunden ist und sich in einer Richtung vom zweiten Verbindungsteil (122) zum Basisteil (111) erstreckt.

13. Überspannungsschutz (3) nach Anspruch 12, der ferner eine Abdeckung umfasst, die die erste Verbindungsöffnung (301) abdeckt und von der ersten Verbindungsöffnung (301) abnehmbar ist.

14. Überspannungsschutz (3) nach Anspruch 12, der ferner einen dritten elektrischen Verbinder (102), eine erdseitige leitfähige Komponente (32) und eine Erdungskomponente (33) umfasst, wobei der dritte elektrische Verbinder (102) eine erste Verbindungskomponente (11), eine zweite Verbindungskomponente (12) und eine dritte Verbindungskomponente (13) umfasst, die erste Verbindungskomponente (11) ein Basisteil (111) und erste Verbindungsteile (112) umfasst, die an zwei gegenüberliegenden Seiten des Basisteils (111) angeordnet sind, die zweite Verbindungskomponente (12) ein gebogenes Teil (121) und ein zweites Verbindungsteil (122) umfasst, wobei ein Ende des gebogenen Teils (121) mit einer ersten Seite des Basisteils (111) verbunden ist, das andere Ende des gebogenen Teils (121) mit dem zweiten Verbindungsteil (122) verbunden ist, ein Spalt (123) zwischen dem zweiten Verbindungsteil (122) und einer von den ersten Verbindungsteilen (112) abgewandten Oberfläche des Basisteils (111) gebildet ist, die dritte Verbindungskomponente (13) mit einem vom gebogenen Teil (121) abgewandten Ende des zweiten Verbindungsteils (122) verbunden ist und sich in einer Richtung vom zweiten Verbindungsteil (122) zum Basisteil (111) erstreckt, die erste Verbindungskomponente (11) des dritten elektrischen Verbinders (102) zum Einstecken der erdseitigen leitfähigen Komponente (32) vorgesehen ist, und die dritte Verbindungskomponente (13) des dritten elektrischen Verbinders (102) mit der Erdungskomponente (33) verbunden ist.

15. Überspannungsschutz (3) nach Anspruch 12, ferner umfassend: eine elektrische Verbindungskomponente (34), die auf einer stromführenden Seite im ersten Gehäuse (30) angeordnet und mit der dritten Verbindungskomponente (13) des ersten elektrischen Verbinders (101) verbunden ist.

16. Backupschutz (2), umfassend:
ein zweites Gehäuse (20), das mit einer zweiten Verbindungsöffnung (201) versehen ist;
einen zweiten elektrischen Verbinder, der in dem zweiten Gehäuse (20) angeordnet ist und eine erste Verbindungskomponente (11), eine zweite Verbindungskomponente (12) und eine dritte Verbindungskomponente (13) umfasst, wobei die erste Verbindungskomponente (11) ein Basisteil (111) und erste Verbindungsteile (112) umfasst, die an zwei gegenüberliegenden Seiten des Basisteils (111) angeordnet sind, wobei die zweite Verbindungskomponente (12) ein zweites Verbindungsteil (122) umfasst; und
eine zweite leitfähige Komponente der stromführenden Seite, die in dem zweiten Gehäuse (20) angeordnet und in die erste Verbindungskomponente (11) eingesteckt ist,
**dadurch gekennzeichnet, dass**
die zweite Verbindungskomponente (12) ferner ein gebogenes Teil (121) umfasst, ein Ende des gebogenen Teils (121) mit einer ersten Seite des Basisteils (111) verbunden ist, das andere Ende des gebogenen Teils (121) mit dem zweiten Verbindungsteil (122) verbunden ist, zwischen dem zweiten Verbindungsteil (122) und einer von den ersten Verbindungsteilen (112) abgewandten Oberfläche des Basisteils (111) ein Spalt (123) gebildet ist, wobei sich der Spalt (123) an einer Position befindet, die der zweiten Verbindungsöffnung (201) entspricht, und die dritte Verbindungskomponente (13) mit einem vom gebogenen Teil (121) abgewandten Ende des zweiten Verbindungsteils (122) verbunden ist und sich in einer Richtung vom zweiten Verbindungsteil (122) zum Basisteil (111) erstreckt.

17. Backupschutz (2) nach Anspruch 16, der ferner eine Abdeckung umfasst, die die zweite Verbindungsöffnung (201) abdeckt und von der zweiten Verbindungsöffnung (201) abnehmbar ist.

18. Elektrischer Verbinder (10), der für einen Überspannungsschutz (3) oder einen Backupschutz (2) geeignet ist, mit einer ersten Verbindungskomponente (11), einer zweiten Verbindungskomponente (12) und einer dritten Verbindungskomponente (13), wobei die erste Verbindungskomponente (11) ein Basisteil (111) und erste Verbindungsteile (112) umfasst, die an zwei gegenüberliegenden Seiten des Basisteils (111) angeordnet sind, und die zweite Verbindungskomponente (12) ein zweites Verbindungsteil (122) umfasst,
**dadurch gekennzeichnet, dass**
die zweite Verbindungskomponente (12) ferner ein gebogenes Teil (121) umfasst, wobei ein Ende des gebogenen Teils (121) mit einer ersten Seite des Basisteils (111) verbunden ist, das andere Ende des gebogenen Teils (121) mit dem zweiten Verbindungsteil (122) verbunden ist, wobei zwischen dem zweiten Verbindungsteil (122) und einer von den ersten Verbindungsteilen (112) abgewandten Oberfläche des Basisteils (111) ein Spalt (123) gebildet ist; und
die dritte Verbindungskomponente (13) mit einem vom gebogenen Teil (121) abgewandten Ende des zweiten Verbindungsteils (122) verbunden ist und sich in einer Richtung vom zweiten Verbindungsteil (122) zum Basisteil (111) erstreckt.

19. Elektrischer Verbinder (10) nach Anspruch 18, wobei die erste Seite des Basisteils (111) mit mindestens zwei ersten Verbindungsteilen (112) versehen ist und das gebogene Teil (121) mit einer Stelle der ersten Seite des Basisteils (111) zwischen benachbarten ersten Verbindungsteilen (112) verbunden ist.

20. Elektrischer Verbinder (10) nach Anspruch 18, wobei eine dem Basisteil (111) zugewandte Oberfläche des zweiten Verbindungsteils (122) mit einem Vorsprung (1221) versehen ist.

## Revendications

1. Dispositif de protection contre la foudre (100) comprenant un parasurtenseur (3) et un protecteur de secours (2), dans lequel
le parasurtenseur (3) comprend: un premier boîtier (30), un côté du premier boîtier (30) faisant face au protecteur de secours (2) étant muni d'un premier trou de connexion (301); et un premier composant conducteur (31) du côté conducteur de courant disposé dans le premier boîtier (30);
le protecteur de secours (2) comprend: un deuxième boîtier (20), un côté du deuxième boîtier (20) faisant face au parasurtenseur (3) étant muni d'un deuxième trou de connexion (201) correspondant au premier trou de connexion (301); et un deuxième composant conducteur du côté conducteur de courant disposé dans le deuxième boîtier (20);
au moins l'un parmi le protecteur de secours (2) et le parasurtenseur (3) comprend en outre un connecteur électrique (10) disposé dans le boîtier respectif et connecté électriquement au composant conducteur du côté conducteur de courant respectif, le connecteur électrique (10) comprenant un premier composant de connexion (11), un deuxième composant de connexion (12) et un troisième composant de connexion (13), le premier composant de connexion (11) comprend une partie de base (111) et des premières parties de connexion (112) disposées sur deux côtés opposés de la partie de base (111), le deuxième composant de connexion (12) comprend une deuxième partie de connexion (122),
**caractérisé en ce que**,
le deuxième composant de connexion (12) comprend en outre une partie coudée (121), une extrémité de la partie coudée (121) est reliée à un premier côté de la partie de base (111), l'autre extrémité de la partie coudée (121) est reliée à la deuxième partie de connexion (122), un espace (123) est formé entre la deuxième partie de connexion (122) et une surface de la partie de base (111) opposée aux premières parties de connexion (112), l'espace (123) est situé à une position correspondant au trou de connexion respectif,
le parasurtenseur (3) et le protecteur de secours (2) peuvent être reliés par l'intermédiaire d'une broche de connexion (4), dans lequel la broche de connexion (4) traverse le premier trou de connexion (301) et le deuxième trou de connexion (201) et est enfichée dans le connecteur électrique (10), dans lequel la broche de connexion (4) traverse le premier trou de connexion (301) et le deuxième trou de connexion (201) et est insérée dans l'espace (123) pour être en contact avec la partie de base (111) et la deuxième partie de connexion (122), et
le premier composant de connexion (11) est prévu pour être enfiché sur l'élément conducteur correspondant du côté conducteur de courant, et le troisième composant de connexion (13) est relié à une extrémité de la deuxième partie de connexion (122) opposée à la partie coudée (121) et s'étend dans une direction allant de la deuxième partie de connexion (122) vers la partie de base (111).

2. Dispositif de protection contre la foudre (100) selon la revendication 1, dans lequel le parasurtenseur (3) comprend un premier connecteur électrique (101), le protecteur de secours (2) comprend un deuxième connecteur électrique, le premier connecteur électrique (101) et le deuxième connecteur électrique sont respectivement configurés comme le connecteur électrique (10), une extrémité de la broche de connexion (4) est insérée dans l'espace (123) du premier connecteur électrique (101), et l'autre extrémité de la broche de connexion (4) est insérée dans l'espace (123) du deuxième connecteur électrique.

3. Dispositif de protection contre la foudre (100) selon la revendication 1, dans lequel le parasurtenseur (3) comprend un premier connecteur électrique (101) configuré comme le connecteur électrique (10), une extrémité de la broche de connexion (4) est insérée dans l'espace (123) du premier connecteur électrique (101), et l'autre extrémité de la broche de connexion (4) est reliée de manière fixe au protecteur de secours (2) et est reliée électriquement au deuxième composant conducteur côté conducteur de courant.

4. Dispositif de protection contre la foudre (100) selon la revendication 2 ou la revendication 3, dans lequel le parasurtenseur (3) comprend en outre un composant de connexion électrique (34) disposé du côté conducteur de courant, et le troisième composant de connexion (13) du premier connecteur électrique (101) est connecté au composant de connexion électrique (34).

5. Dispositif de protection contre la foudre (100) selon la revendication 1, dans lequel le protecteur de secours (2) comprend un deuxième connecteur électrique configuré comme le connecteur électrique (10), une extrémité de la broche de connexion (4) est insérée dans l'espace (123) du deuxième connecteur électrique, et l'autre extrémité de la broche de connexion (4) est reliée de manière fixe au parasurtenseur (3) et reliée électriquement au premier composant conducteur du côté conducteur de courant (31).

6. Dispositif de protection contre la foudre (100) selon la revendication 1, dans lequel le parasurtenseur (3) comprend en outre un troisième connecteur électrique (102), un composant conducteur côté terre (32) et un composant de mise à la terre (33), le troisième connecteur électrique (102) est configuré comme le connecteur électrique (10), le premier composant de connexion (11) du troisième connecteur électrique (102) est prévu pour l'enfi-chage du composant conducteur côté terre (32), et le troisième composant de connexion (13) du troisième connecteur électrique (102) est relié au composant de mise à la terre (33).

7. Dispositif de protection contre la foudre (100) selon la revendication 6, dans lequel un troisième trou de connexion (302) est prévu sur le premier boîtier (30) à une position correspondant à l'espace (123) du troisième connecteur électrique (102).

8. Dispositif de protection contre la foudre (100) selon la revendication 7, dans lequel le protecteur de secours (2) est un premier protecteur de secours (210), le parasurtenseur (3) est un premier parasurtenseur (310), le premier protecteur de secours (210) et le premier parasurtenseur (310) constituent une première unité de protection de phase (110), et le dispositif de protection contre la foudre (100) comprend en outre une deuxième unité de protection de phase (120) et un composant de convergence de courant (5), la deuxième unité de protection de phase (120) comprenant un deuxième protecteur de secours (220) et un deuxième parasurtenseur (320) reliés via la broche de connexion (4),
le deuxième parasurtenseur (320) comprend le premier boîtier (30), le composant conducteur côté terre (32) et le troisième connecteur électrique (102), le composant de convergence de courant (5) passe à travers l'espace (123) du troisième connecteur électrique (102) du premier parasurtenseur (310), le troisième trou de connexion (302) sur le premier boîtier (30) du premier parasurtenseur (310), le troisième trou de connexion (302) sur le premier boîtier (30) du deuxième parasurtenseur (320), et l'espace (123) du troisième connecteur électrique (102) du deuxième parasurtenseur (320), et contacte la partie de base (111) du troisième connecteur électrique (102) et la deuxième partie de connexion (122).

9. Dispositif de protection contre la foudre (100) selon la revendication 8, dans lequel le deuxième boîtier (20) est muni d'un quatrième trou de connexion (202) correspondant au troisième trou de connexion (302), et le composant de convergence de courant (5) traverse en outre le quatrième trou de connexion (202).

10. Dispositif de protection contre la foudre (100) selon la revendication 1, dans lequel le premier côté de la partie de base (111) est muni d'au moins deux premières parties de connexion (112), et la partie coudée (121) est reliée à un emplacement du premier côté de la partie de base (111) situé entre des premières parties de connexion adjacentes (112).

11. Dispositif de protection contre la foudre (100) selon la revendication 1, dans lequel une surface de la deuxième partie de connexion (122) faisant face à la partie de base (111) est pourvue d'une saillie (1221).

12. Parasurtenseur (3) comprenant:
un premier boîtier (30) muni d'un premier trou de connexion (301);
un premier connecteur électrique (101) disposé dans le premier boîtier (30) et comprenant un premier composant de connexion (11), un deuxième composant de connexion (12) et un troisième composant de connexion (13), dans lequel le premier composant de connexion (11) comprend une partie de base (111) et des premières parties de connexion (112) disposées sur deux côtés opposés de la partie de base (111), le deuxième composant de connexion (12) comprend une deuxième partie de connexion (122); et
un premier composant conducteur (31) du côté conducteur de courant disposé dans le premier boîtier (30) et enfiché dans le premier composant de connexion (11),
**caractérisé en ce que**,
le deuxième composant de connexion (12) comprend en outre une partie coudée (121), une extrémité de la partie coudée (121) étant reliée à un premier côté de la partie de base (111), l'autre extrémité de la partie coudée (121) est reliée à la deuxième partie de connexion (122), un espace (123) est formé entre la deuxième partie de connexion (122) et une surface de la partie de base (111) opposée aux premières parties de connexion (112), l'espace (123) est situé à une position correspondant au premier trou de connexion (301), et le troisième composant de connexion (13) est relié à une extrémité de la deuxième partie de connexion (122) éloignée de la partie coudée (121) et s'étend dans une direction allant de la deuxième partie de connexion (122) vers la partie de base (111).

13. Parasurtenseur (3) selon la revendication 12, comprenant en outre un couvercle recouvrant le premier trou de connexion (301) et amovible du premier trou de connexion (301).

14. Parasurtenseur (3) selon la revendication 12, comprenant en outre un troisième connecteur électrique (102), un composant conducteur côté terre (32) et un composant de mise à la terre (33), dans lequel le troisième connecteur électrique (102) comprend un premier composant de connexion (11), un deuxième composant de connexion (12) et un troisième composant de connexion (13), le premier composant de connexion (11) comprend une partie de base (111) et des premières parties de connexion (112) disposées sur deux côtés opposés de la partie de base (111), le deuxième composant de connexion (12) comprend une partie coudée (121) et une deuxième partie de connexion (122), une extrémité de la partie coudée (121) est reliée à un premier côté de la partie de base (111), l'autre extrémité de la partie coudée (121) est reliée à la deuxième partie de connexion (122), un espace (123) est formé entre la deuxième partie de connexion (122) et une surface de la partie de base (111) opposée aux premières parties de connexion (112), le troisième composant de connexion (13) est relié à une extrémité de la deuxième partie de connexion (122) éloignée de la partie coudée (121) et s'étend dans une direction allant de la deuxième partie de connexion (122) vers la partie de base (111), le premier composant de connexion (11) du troisième connecteur électrique (102) est prévu pour l'enfi-chage du composant conducteur côté terre (32), et le troisième composant de connexion (13) du troisième connecteur électrique (102) est relié au composant de mise à la terre (33).

15. Parasurtenseur (3) selon la revendication 12, comprenant en outre: un composant de connexion électrique (34) disposé du côté conducteur de courant dans le premier boîtier (30) et connecté au troisième composant de connexion (13) du premier connecteur électrique (101).

16. Protecteur de secours (2) comprenant:
un deuxième boîtier (20) muni d'un deuxième trou de connexion (201);
un deuxième connecteur électrique disposé dans le deuxième boîtier (20) et comprenant un premier composant de connexion (11), un deuxième composant de connexion (12) et un troisième composant de connexion (13), le premier composant de connexion (11) comprend une partie de base (111) et des premières parties de connexion (112) disposées sur deux côtés opposés de la partie de base (111), le deuxième composant de connexion (12) comprend une deuxième partie de connexion (122); et
un deuxième composant conducteur du côté conducteur de courant disposé dans le deuxième boîtier (20) et enfiché dans le premier composant de connexion (11),
**caractérisé en ce que**,
le deuxième composant de connexion (12) comprend en outre une partie coudée (121), une extrémité de la partie coudée (121) est reliée à un premier côté de la partie de base (111), l'autre extrémité de la partie coudée (121) est reliée à la deuxième partie de connexion (122), un espace (123) est formé entre la deuxième partie de connexion (122) et une surface de la partie de base (111) opposée aux premières parties de connexion (112), dans lequel l'espace (123) est situé à une position correspondant au deuxième trou de connexion (201), et le troisième composant de connexion (13) est relié à une extrémité de la deuxième partie de connexion (122) opposée à la partie coudée (121) et s'étend dans une direction allant de la deuxième partie de connexion (122) vers la partie de base (111).

17. Protecteur de secours (2) selon la revendication 16, comprenant en outre un couvercle recouvrant le deuxième trou de connexion (201) et amovible du deuxième trou de connexion (201).

18. Connecteur électrique (10) adapté à un parasurtenseur (3) ou à un protecteur de secours (2), comprenant un premier composant de connexion (11), un deuxième composant de connexion (12) et un troisième composant de connexion (13), le premier composant de connexion (11) comprenant une partie de base (111) et des premières parties de connexion (112) disposées sur deux côtés opposés de la partie de base (111), et le deuxième composant de connexion (12) comprenant une deuxième partie de connexion (122),
**caractérisé en ce que**,
le deuxième composant de connexion (12) comprend en outre une partie coudée (121), une extrémité de la partie coudée (121) étant reliée à un premier côté de la partie de base (111), l'autre extrémité de la partie coudée (121) est reliée à la deuxième partie de connexion (122), un espace (123) est formé entre la deuxième partie de connexion (122) et une surface de la partie de base (111) opposée aux premières parties de connexion (112); et
le troisième composant de connexion (13) est relié à une extrémité de la deuxième partie de connexion (122) opposée à la partie coudée (121) et s'étend dans une direction allant de la deuxième partie de connexion (122) vers la partie de base (111).

19. Connecteur électrique (10) selon la revendication 18, dans lequel le premier côté de la partie de base (111) est muni d'au moins deux premières parties de connexion (112), et la partie coudée (121) est reliée à un emplacement du premier côté de la partie de base (111) situé entre des premières parties de connexion adjacentes (112).

20. Connecteur électrique (10) selon la revendication 18, dans lequel une surface de la deuxième partie de connexion (122) faisant face à la partie de base (111) est pourvue d'une saillie (1221).
